Europäisches Patentamt

European Patent Office

Office européen des brevets

(11) Veröffentlichungsnummer: **0 356 844**
**A2**

## (12) EUROPÄISCHE PATENTANMELDUNG

(21) Anmeldenummer: 89115315.7

(51) Int. Cl.5: **F16C 3/02**

(22) Anmeldetag: 19.08.89

(30) Priorität: 31.08.88 DE 3829521

(43) Veröffentlichungstag der Anmeldung:
07.03.90 Patentblatt 90/10

(84) Benannte Vertragsstaaten:
AT BE DE ES FR GB IT NL SE

(71) Anmelder: BASF Aktiengesellschaft
Carl-Bosch-Strasse 38
D-6700 Ludwigshafen(DE)

(72) Erfinder: Schuermann, Helmut
Burgunderstrasse 13
D-6701 Maxdorf(DE)
Erfinder: Lenz, Werner
Freyastrasse 9
D-6700 Ludwigshafen(DE)

(54) **Hohlwelle aus faserverstärktem Kunststoff.**

(57) Die Hohlwelle besteht aus einem rohrförmigen, aus gewickelten Faserlagen aufgebauten Wellenteil 1 und endseitig daran angeformten, drehmomentübertragenden Anschlußmitteln 2. Zwecks Verbesserung der Torsionsfestigkeit enthält das Wellenteil zwischen den Anschlußmitteln ein oder mehrere im wesentlichen scheibenförmige(s), zumindest annähernd dem freien Querschnitt des Wellenteils entsprechende(s) und mit ihm kraftschlüssig verbundene(s) Versteifungselement(e) 3.

EP 0 356 844 A2

# Hohlwelle aus faserverstärktem Kunststoff

Die Erfindung bezieht sich auf eine Hohlwelle aus faserverstärktem Kunststoff mit einem rohrförmigen, aus gewickelten Faserlagen aufgebauten Wellenteil und mit endseitig daran angeformten, drehmomentübertragenden Anschlußmitteln.

Antriebswellen aus Faserkunststoffverbunden sind für die Automobilindustrie in vielerlei Hinsicht interessant. Sie besitzen alle Eigenschaften, die sie als Ersatz von Stahl- oder Aluminiumwellen sinnvoll erscheinen lassen. Ihre besonderen Vorteile liegen in der Gewichtsersparnis, der Korrosionsfreiheit und den gegenüber Metallwellen besseren akustischen Eigenschaften.

Aufgrund des großen Verhältnisses von Elastizitätsmodul zu Dichte können mit solchen Wellen höhere kritische Drehzahlen erreicht werden, als mit Metallwellen gleicher Abmessungen. Dies gilt insbesondere für Wellen aus hochsteifen Kohlenstoffasern. Steht nicht die Forderung nach einer hohen biegekritischen Drehzahl im Vordergrund, so besteht die Möglichkeit, mit einer Antriebswelle aus faserverstärktem Kunststoff große Abstände zwischen den endseitigen Lagerungen zu überbrücken. Auf diese Weise gelingt es, zweiteilige Metallwellen durch einteilige Faserverbundwellen zu ersetzen, so daß als sekundäre Gewichtsreduktion noch die Einsparung eines Zwischenlagers hinzukommt.

Es sind im wesentlichen zwei Aspekte, die bei der Auslegung einer Faserverbundwelle berücksichtigt werden müssen. Zum einen darf eine Welle durch die im Fahrbetrieb auftretenden dynamischen Beanspruchungen nicht zerrüttet werden, d.h. sie muß eine ausreichende Schwingfestigkeit besitzen. Zum anderen muß die Welle auch die sogenannte Mißbrauchslast ertragen, d.h. sie muß eine hohe statische Bruchfestigkeit besitzen. Ein durch Mißbrauchslast verursachtes Versagen der Welle ist nicht auf eine begrenzte Schubfestigkeit der Wellenwand, sondern auf das sogenannte Torsionsbeulen zurückzuführen. Das Torsionsbeulen einer Welle äußert sich darin, daß sich der ursprünglich kreisförmige Wellenquerschnitt stark ovalisiert.

Bekannte Möglichkeiten, die Beulgrenze einer Hohlwelle aus faserverstärktem Kunststoff anzuheben sind die Erhöhung der Umfangsteifigkeit sowie die Erhöhung der Wanddicke des Wellenteils. Diese Maßnahmen führen jedoch in den meisten Fällen nicht zu befriedigenden Ergebnissen, sei es, daß eine hohe kritische Wellendrehzahl nicht erreichbar ist oder sei es, daß die Vorteile des Leichtbaues weitgehend verloren gehen. Darüber hinaus steigen mit vergrößerter Wanddicke der Welle auch die Material- und Herstellkosten.

Aufgabe der Erfindung ist demnach eine Hohlwelle der eingangs definierten Art hinsichtlich der kritischen Beullast zu verbessern.

Diese Aufgabe wird dadurch gelöst, daß das rohrförmige Wellenteil zwischen den Anschlußmitteln wenigstens ein im wesentlichen scheibenförmiges, zumindest annähernd dem freien Querschnitt des Wellenteils entsprechendes und mit ihm kraftschlüssig verbundenes Versteifungselement enthält.

Durch das erfindungsgemäße Versteifungselement kann die Belastbarkeit von auf Torsion beanspruchten Faserverbund-Antriebswellen deutlich erhöht werden, ohne daß die Wanddicke vergrößert werden muß. Dadurch lassen sich Gewicht einsparen, die Fertigungszeiten verringern und, wenn als Fasermaterial Kohlenstoffasern verwendet werden, in erheblichem Umfange Materialkosten einsparen. Die Versteifungselemente können kostengünstig durch Spritzgießen hergestellt werden und sie können auf einfache Art und Weise innerhalb des Wellenteils fixiert werden.

Häufig genügt es schon, nur ein einziges Versteifungselement in der Mitte des Wellenteils anzubringen, um eine deutliche Erhöhung der Beulgrenze zu erreichen. Als Versteifungselement eignen sich scheibenförmige Profile u. dgl., welche leicht dem freien Querschnitt des Wellenteils angepaßt werden können.

Die Belastungsgrenzen einer Hohlwelle aus faserverstärktem Kunststoff lassen sich weiter steigern, wenn zwischen den Anschlußmitteln mehrere Versteifungselemente in etwa gleichen Abständen zueinander und zu den Anschlußmitteln angeordnet sind. Die Versteifungselemente können aus Metall, vorzugsweise aus thermoplastischem Kunststoff bestehen.

Zur Fixierung der Versteifungselemente innerhalb des Wellenteils können die Versteifungselemente geklebt oder bei entsprechenden Werkstoffpaarungen, beispielsweise bei Thermoplasten, durch Schweißen mit dem Wellenteil verbunden werden. Eine kraftschlüssige Verbindung zwischen Versteifungselement und Wellenteil ist auch dadurch erreichbar, daß die Versteifungselemente mit entsprechenden Außenabmessungen im Verhältnis zum freien Querschnitt des Wellenteils gefertigt und im Wellenteil festgeklemmt werden. Es ist außerdem denkbar, Versteifungselemente mit veränderbarem Außendurchmesser zu verwenden, um sie leicht an den gewünschten Stellen des Wellenteils plazieren zu können. Nach der Montage werden die Versteifungselemente dann auf einen größeren Außendurchmesser gebracht und dadurch innerhalb des Wellenteils festgeklemmt.

Nach einem weiteren Merkmal der Erfindung weist - vorwiegend bei aus duroplastischer Matrix bestehendem Aufbau - der Wellenteil auf seiner inneren Mantelfläche im Bereich der Versteifungselemente einen dünnwandigen Ring auf. Dieser wird üblicherweise bereits bei der Herstellung des Wellenteils angebracht und besteht zweckmäßigerweise aus thermoplastischem Kunststoff. Hierdurch besteht die Möglichkeit, thermoplastische Versteifungselemente mit der Rohrwandung durch Schweißung zu verbinden. Auf diese Weise ist ein fester Sitz der Versteifungselemente garantiert, so daß sie bei Betrieb der Welle nicht in axialer Richtung wandern können.

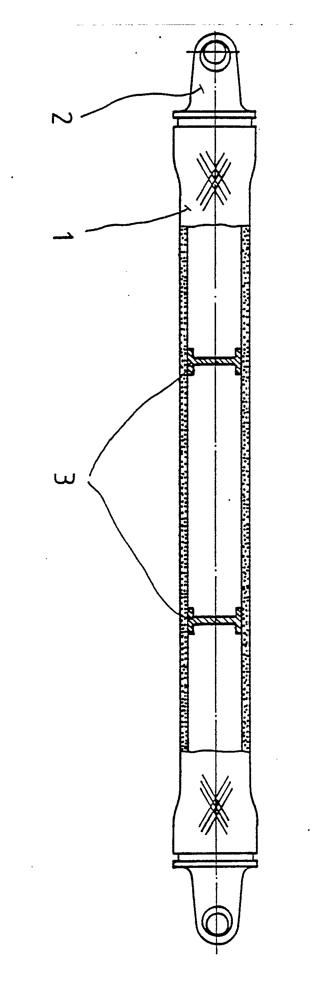

Die Erfindung wird nachfolgend unter Hinweis auf die Zeichnung anhand eines Ausführungsbeispiels näher erläutert.

Die dargestellte Hohlwelle umfaßt ein mittels Fasern verstärktes Wellenteil (1) aus Kunststoff, das an seinen beiden Enden drehmomentübertragende Anschlußmittel (2) enthält. Mit (3) sind zwei scheibenförmige Versteifungselemente bezeichnet, die einen verbreiterten Randbereich aufweisen und mit dem Wellenteil kraftschlüssig verbunden sind. Eine derartige Hohlwelle eignet sich beispielsweise als Kardanwelle eines Kraftfahrzeuges.

Das rohrförmige Wellenteil (1) ist nach an sich bekannten Verfahren hergestellt, indem mit durch Strahlung oder Temperaturerhöhung härtbaren Kunststoffen oder mit thermoplastischen Kunststoffen getränktes Fasermaterial auf einen Dorn aufgewickelt wird.

Als durch Strahlung oder Temperaturerhöhung härtbare Kunststoffe können alle Kunstharze verwendet werden, die durch freie Radikale vernetzt werden können, wie z.B. ungesättigte Polyesterharze, Vinylesterharze, modifizierte Epoxyharze, modifizierte Polyurethanharze oder Mischungen dieser Harze. Außerdem können mit Erfolg auch Gemische dieser Harze mit damit mischpolymerisierbaren ungesättigten Monomeren verwendet werden.

Geeignete thermoplastische Kunststoffe sind beispielsweise Olefinpolymerisate, wie Polyethylen oder Polypropylen; Styrolpolymerisate, wie Polystyrol oder Copolymere des Styrols mit bis zu 50 Gew.% Acrylnitril, α-Methyl-styrol, Maleinsäureanhydrid, Methylmethacrylat, sowie kautschukmodifizierte Styrolpolymerisate, vorzugsweise solche, die 2 bis 25 Gew.% eines Butadienkautschuks enthalten; Chlor enthaltende Polymerisate, wie Polyvinylchlorid, Polyvinylidenchlorid oder chlorierte Polyolefine; Polyamide, Polymethylmethacrylat, Polyester aus Terephthalsäure und gesättigten Diolen, Polycarbonat sowie Mischungen dieser Polymerisate.

Als Fasermaterialien kommen strang- oder bandförmige Gebilde aus natürlichen und synthetischen organischen Fasern, wie z.B. Aramid, Polyamid-, Polyesterfasern und dergleichen sowie aus anorganischen Fasern, z.B. Glasfasern, Kohlenstoffasern usw. in Betracht. Unter diesen sind Glasfasern und Kohlenstoffasern besonders bevorzugt. Glasfasern sind mit üblichen Schlichten behandelt, die z.B. einen Haftvermittler auf Silan- oder Chrombasis enthalten.

Das Fasermaterial ist mehr oder weniger stark zur Achse des rohrförmigen Wellenteils geneigt orientiert. Im allgemeinen beträgt der Wickelwinkel etwa ± 12° bis etwa ± 45° Bei diesen Wickelwinkeln ergeben sich genügend hohe Torsionssteifigkeiten und genügend hohe Längsbiegesteifigkeiten.

Vor dem Anbringen der endseitigen Anschlußmittel (2) werden in das Wellenteil (1) zur Verhinderung des Torsionsbeulens die Versteifungselemente (3) eingesetzt. Diese sind im dargestellten Beispiel mit Übermaß gefertigt, d.h. der Außendurchmesser der Versteifungselemente ist größer als die lichte Weite des Wellenteils. Sie werden von einer Endseite des Wellenteils mittels einer gesonderten Vorrichtung in das Wellenteil eingeschoben und mit diesem befestigt.

## Ansprüche

1. Hohlwelle aus faserverstärktem Kunststoff mit einem rohrförmigen, aus gewickelten Faserlagen aufgebauten Wellenteil und mit endseitig daran angeformten, drehmomentübertragenden Anschlußmitteln, dadurch gekennzeichnet, daß das rohrförmige Wellenteil (1) zwischen den Anschlußmitteln (2) wenigstens ein im wesentlichen scheibenförmiges, zumindest annähernd dem freien Querschnitt des Wellenteils entsprechendes und mit ihm verbundenes Versteifungselement (3) enthält.

2. Hohlwelle nach Anspruch 1, dadurch gekennzeichnet, daß zwischen den Anschlußmitteln (2) mehrere Versteifungselemente (3) in etwa gleichen Abständen zueinander und zu den Anschlußmitteln angeordnet sind.

3. Hohlwelle nach den Ansprüchen 1 oder 2, dadurch gekennzeichnet, daß das Wellenteil (1) auf seiner inneren Mantelfläche im Bereich der Versteifungselemente (3) einen dünnwandigen Ring aufweist.

108/88